# EUROPÄISCHE PATENTSCHRIFT

(11) **EP 3 271 256 B1**
(45) Veröffentlichungstag und Bekanntmachung des Hinweises auf die Patenterteilung: **29.04.2020**
(21) Anmeldenummer: 16712783.6
(22) Anmeldetag: 18.03.2016
(51) Int. Cl.: B65D 1/02, B29C 49/54, B65D 79/00

(54) **BEHÄLTER UND BLASFORM**
CONTAINER AND BLOW MOLD
CONTENANT ET MOULE DE SOUFFLAGE

(30) Priorität: 20.03.2015 DE 102015003514
(43) Veröffentlichungstag der Anmeldung: 24.01.2018
(73) Patentinhaber: KHS Corpoplast GmbH, 22145 Hamburg (DE)
(72) Erfinder: HAUBENSCHILD, Jens-Uwe, 22397 Hamburg (DE); WIESE, Arne, 22926 Ahrensburg (DE); ROMMEL, Christian, 23617 Stockelsdor (DE)
(74) Vertreter: Meissner Bolte Partnerschaft mbB
(86) Internationale Anmeldenummer: PCT/EP2016/056048
(87) Internationale Veröffentlichungsnummer: WO 2016/150880

(56) Entgegenhaltungen:
- EP-A1- 2 703 307
- EP-A1- 2 764 967
- EP-A1- 2 957 515
- WO-A1-2004/028910
- DE-A1-102007 034 786
- US-A1- 2005 196 569
- US-A1- 2007 215 571
- US-A1- 2011 017 700
- US-A1- 2012 037 645

## Beschreibung

Die Erfindung betrifft einen Behälter zur Aufnahme von flüssigem Füllgut umfassend eine einen Behälterinnenraum umschließende Behälterwandung mit einer Öffnung, wobei die Behälterwandung einen Mündungsbereich an der Öffnung, einen dem Mündungsbereich entgegengesetzt angeordneten Bodenbereich sowie einen sich zwischen Mündungsbereich und Bodenbereich erstreckenden Seitenbereich aufweist.

Die Erfindung betrifft des Weiteren eine Blasform zur Herstellung eines Behälters.

Bei Behältern für Flüssigkeiten, insbesondere bei Leichtgewichtsbehältern aus Kunststoff besteht in der Regel die Anforderung, dass auch bei Temperaturschwankungen und entsprechenden Volumenänderungen des Füllgutes, die zu einer Veränderung des Innendrucks im Behälter führt, das äußere Erscheinungsbild sowie die Stabilität des Behälters nicht merklich beeinträchtigt werden. Die Behälter sind daher in der Regel derart ausgelegt, dass die Behälterwandungen ausreichend formstabil ausgebildet sind.

Als besonders problematisch hat sich dabei die Stabilisierung der Behälterform gegen Unterdruck im Behälter gegenüber der Umgebung herausgestellt, der beispielsweise beim Abkühlen des gefüllten Behälters entstehen kann. Wenn die Behälterwandung nicht ausreichend formstabil ausgeführt ist, beispielsweise durch eine formstabilisierende Kontur und/oder eine ausreichend dicke Wandstärke, neigen bekannte Behälter zu unerwünschten Verformungen, beispielsweise indem eine im Wesentlichen zylindrische Flasche einen ovalen Querschnitt annimmt. Um dies zu vermeiden, bestehen bei der Auslegung von stabilen Behältern bisher erhebliche Einschränkungen bei Formfreiheit und/oder möglichen Materialeinsparungen.

Weitere Rahmenbedingungen, die bei der Auslegung eines Behälters grundsätzlich zu berücksichtigen sind, sind beispielsweise die Standfestigkeit.

EP 2 764 967 A1, US 2005/196569 A1, EP 2 703 307 A1, US 2011/017700A1 und US 2012/037645 A1 beschreiben Behälter, die zum Ausgleich schwankender Innendrücke verformbare Bodenbereiche aufweisen. Dabei können beispielsweise verschiedene Bodenstrukturen bei Druckveränderungen in axiale Richtung umklappen und so ein größeres oder kleineres Innenvolumen schaffen.

Der Erfindung liegt die Aufgabe zugrunde, bei Behältern für flüssiges Füllgut weitere Auslegungsfreiheiten, insbesondere bezüglich Formfreiheit und Möglichkeiten zur Materialeinsparung, zu erschließen, wobei die genannten Anforderungen an einen Behälter, insbesondere im Hinblick auf Stabilität bei Unterdruck im Behälter, weiterhin erfüllt werden sollen.

Diese Aufgabe wird gemäß der Erfindung gelöst durch einen Behälter zur Aufnahme von flüssigem Füllgut umfassend eine einen Behälterinnenraum umschließende Behälterwandung mit einer Öffnung, wobei die Behälterwandung einen Mündungsbereich an der Öffnung, einen dem Mündungsbereich entgegengesetzt angeordneten Bodenbereich sowie einen sich zwischen Mündungsbereich und Bodenbereich erstreckenden Seitenbereich aufweist, wobei der erfindungsgemäße Behälter dadurch weitergebildet ist, dass die Behälterwandung im Bodenbereich einen formstabilisierten Zentralbereich sowie einen den Zentralbereich ringförmig umgebenden flexiblen Flachbereich aufweist, wobei die Behälterwandung vom Zentralbereich derart abgewinkelt in den Flachbereich übergeht, dass zwischen dem Zentralbereich und dem Flachbereich eine den Zentralbereich ringförmig umgebende Kante in der Behälterwandung ausgebildet ist, wobei im Bodenbereich der Behälterwandung ein den Flachbereich ringförmig umgebender Standwulst ausgebildet ist und der Flachbereich derart ausgebildet ist, dass sich die Behälterwandung im Flachbereich aus dem Behälterinneren heraus in Längsrichtung des Behälters über den Standwulst hinaus auswölben und einen Standring bilden kann, und dass sich der Durchmesser des Standrings bei steigendem Innendruck in dem Behälter verkleinern kann.

Durch den flexiblen Flachbereich wird dabei ermöglicht, dass sich die Behälterwandung im Bodenbereich verformt und dadurch das Innenvolumen des Behälters in gewissen Grenzen veränderlich ist, um einen Druckunterschied zur Umgebung wenigstens teilweise auszugleichen.

Beispielsweise verformt sich der Flachbereich unter Einwirkung eines Unterdrucks zum Behälterinnenraum hin, so dass sich der formstabilisierte Zentralbereich im Bodenbereich des Behälters zum Mündungsbereich hin bewegt. Hierdurch wird das Volumen des Behälterinnenraumes reduziert und der Unterdruck im Behälter gemindert. Entsprechend ermöglicht die Erfindung, die Behälterwandung insbesondere im Seitenbereich des Behälters weniger stabil auszuführen, indem beispielsweise Material in der Wandstärke eingespart und/oder auf formstabilisierende Konturen verzichtet werden kann.

Der Seitenbereich des Behälters ist bevorzugt als im Wesentlichen vertikale Seitenwand ausgeprägt. Dies schließt jedoch nicht aus, dass der Seitenbereich formstabilisierende und/oder stilprägende Konturen umfassen kann.

Der mittels der Erfindung maximal kompensierbare Druckunterschied kann dadurch vergrößert werden, dass der Behälter unter Überdruck gefüllt und verschlossen wird, so dass beispielsweise beim Abkühlen des eingefüllten Füllgutes zunächst der Überdruck abgebaut wird, bevor überhaupt ein Unterdruck im Behälter auftritt. Dabei ist bei der Erfindung auch berücksichtigt, dass sich die Behälterwandung im Flachbereich gegebenenfalls weiter auswölbt als sämtliche sonstige Konturen im Bodenbereich des Behälters, d.h. aus dem Behälterinneren heraus über den Standwulst des Behälters hinauswölbt. Mit anderen Worten ist der Flachbereich derart ausgebildet, dass er sich aus dem Behälterinneren heraus über den Standwulst des Behälters hinaus auswölben kann. Die Auswölbung des Flachbereichs ist vorzugsweise in Längsrichtung des Behälters. In diesem Fall, der insbesondere bei Überdruck im Behälter eintreten kann, bildet der ausgewölbte Flachbereich einen Grat, der den Zentralbereich ringförmig umgibt und als Standring für den Behälter zur Verfügung steht.

Der erfindungsgemäße Flachbereich ist derart flexibel, dass es bereits bei relativ geringem Überdruck in dem Behälter zu einer Auswölbung des Flachbereichs und zur Ausbildung eines Standrings durch den Flachbereich kommt. Mit anderen Worten erlaubt die Flexibilität des Flachbereichs, dass der Flachbereich leicht auswölbbar ist. "Überdruck" ist ein Druck im Behälterinneren, der oberhalb des Drucks außerhalb des Behälters liegt, "Unterdruck" ein Druck im Behälterinneren, der unterhalb des Drucks außerhalb des Behälters liegt. Die Druckdifferenz ist der Differenzbetrag zwischen dem Druck innerhalb des Behälters und außerhalb des Behälters, wobei positive Differenzwerte einen Überdruck im Behälterinneren anzeigen. Der Flachbereich ist derart ausgebildet, dass er sich bei einem geringem Überdruck im Behälterinnern, d.h. zum Beispiel bei einer Druckdifferenz zwischen Innen- und Außendruck von mindestens 0,05 bar, vorzugsweise von mindestens 0,2 bar, aus dem Behälterinneren heraus über den Standwulst des Behälters hinaus auswölbt und einen Standring bildet. Mit anderen Worten ist der Flachbereich derart ausgebildet, dass er sich bereits bei einer geringem Druckdifferenz zwischen Innen- und Außendruck des Behälters, d.h. einer Druckdifferenz von 0,05 bar bis 0,5 bar, vorzugsweise von 0,2 bar bis 0,3 bar auswölbt.

Mit steigendem Innendruck und entsprechend stärkerer Auswölbung des Flachbereichs verschiebt sich dieser Grat oder Standring in Richtung des Zentralbereichs. Der Durchmesser des durch den Flachbereich ausgebildeten Standrings wird somit mit steigendem Druck in dem Behältnis kleiner. Durch die erfindungsgemäße formstabile Ausbildung des Zentralbereichs und die erfindungsgemäße Kante zwischen Zentralbereich und Flachbereich wird jedoch sichergestellt, dass stets eine ausreichend große Standfläche für einen sicheren Stand des Behälters zur Verfügung steht.

Der Zentralbereich ist im Wesentlichen rund und zentral, d.h. mittig, im Bodenbereich des Behälters angeordnet. Es hat sich herausgestellt, dass eine besonders gute Standstabilität des Behälters gewährleistet ist, wenn der Durchmesser des Zentralbereichs etwa 25 bis 75 % des Durchmessers des Bodenbereichs beträgt, vorzugsweise etwa 40 bis 70 %, noch stärker bevorzugt etwa 50 bis 65 %. Mit anderen Worten beträgt der Durchmesser des Zentralbereichs vorzugsweise mindestens 25 %, stärker bevorzugt mindestens 40 %, noch stärker bevorzugt mindestens 50 % des Durchmessers des Bodenbereichs. Die Größe des Zentralbereichs stellt sicher, dass die Größe des durch den Flachbereich ausgebildeten Standrings ausreichend ist, um einen stabilen Stand des Behälters sicherzustellen. Anders gesagt, weist der Zentralbereich einen Durchmesser auf, der sicherstellt, dass bei maximaler Auswölbung des Flachbereichs über den Standwulst hinaus ein Standring ausgebildet ist, der einen stabilen Stand des Behälters ermöglicht.

Es versteht sich, dass der äußere Radius der Kante zwischen Flachbereich und Zentralbereich im Wesentlichen dem äußeren Radius des Zentralbereichs zuzüglich der Kantendicke entspricht, da die Kante unmittelbar an den Zentralbereich anschließt. Daher entspricht der äußere Radius der Kante zwischen Flachbereich und Zentralbereich etwa der Hälfte des Durchmessers des Zentralbereichs zuzüglich der Kantendicke.

Der Durchmesser des Flachbereichs beträgt etwa 70 bis 100 %, vorzugsweise etwa 80 bis 95 % des Durchmessers des Bodenbereichs. Der Durchmesser des Flachbereichs wird gemessen als Durchmesser des Flachbereichs, der den Zentralbereich und die Kante zwischen Zentralbereich und Flachbereich enthält. Mit anderen Worten beträgt der Durchmesser des Flachbereichs vorzugsweise mindestens 70 %, stärker bevorzugt mindestens 80 % des Durchmessers des Bodenbereichs.

Es versteht sich, dass der äußere Radius der Kante zwischen Flachbereich und Standwulst im Wesentlichen dem äußeren Radius des Flachbereichs zuzüglich der Kantendicke entspricht, da die Kante unmittelbar an den Flachbereich anschließt. Daher entspricht der äußere Radius der Kante zwischen Flachbereich und Standwulst etwa der Hälfte des Durchmessers des Flachbereichs zuzüglich der Kantendicke.

Die Erfindung ist besonders geeignet für Behälter, deren Behälterwandung ein thermoplastisches Material umfassen, das als spritzgegossener Rohling bereitgestellt und bei der Herstellung des Behälters mittels einer hohlen Blasform nach geeigneter thermischer Konditionierung durch Anwendung eines Streckblasverfahrens umgeformt wurde. Geeignete thermoplastische Materialien sind insbesondere Kunststoffe aus der Klasse der Polyester, beispielsweise Polyethylenterephthalat (PET), Polyethylennaphthalat (PEN), Polyethylen (PE), hochdichtes Polyethylen (HDPE für englisch: "high density poly ethylene") oder Polypropylen (PP). Im Bereich der Getränke- und Haushaltsmittelbehälter ist insbesondere PET sehr vorteilhaft, während im medizinischen Bereich PP besondere Vorteile bietet. Für sensible Flüssigkeiten wie Milch und Milchprodukte hat sich zudem die Verwendung von HDPE bewährt.

Die Kante zwischen Zentralbereich und Flachbereich ist derart ausgebildet, dass sie die Verformung des Bodenbereichs begrenzt. Insbesondere wird bei geringem Überdruck im Behälterinneren eine Auswölbung des Zentralbereichs in Richtung des Behälteräußeren, über einen durch den Flachbereich ausgebildeten Standring hinaus, verhindert.

Eine vorteilhafte Weiterbildung der Erfindung besteht darin, dass die Kante zwischen Zentralbereich und Flachbereich wulstartig ausgebildet ist. Dadurch wird die Behälterwandung an der Kante weiter stabilisiert, was wiederum wirksam verhindert, dass die Behälterwandung an der Kante unter weiter steigendem Überdruck in der Flasche einknickt und der Bodenbereich insgesamt in seiner Stabilität beeinträchtigt wird. So kann die Kante zum Beispiel durch eine Materialverdickung gebildet werden. Diese Materialverdickung führt zu einer Versteifung an der Kante. Alternativ oder zusätzlich kann die Kante zwischen Zentralbereich und Flachbereich aber auch als Knick oder als Stufe ausgebildet sein. In einer bevorzugten Ausführungsform ist die Kante als Knick ausgebildet. In dieser und anderen Ausführungsformen stoßen der Flachbereich und der Zentralbereich abgewinkelt aufeinander.

Ebenso ist daran gedacht, im Bodenbereich der Behälterwandung einen den Flachbereich ringförmig umgebenden Standwulst auszubilden. Dadurch wird der Bodenbereich an der dem Zentralbereich gegenüber liegenden Seite des Flachbereichs ebenfalls gegen einknicken stabilisiert. Gleichzeitig steht der Standwulst als Standring zur Verfügung, wenn der Flachbereich zum Behälterinnenraum hin gewölbt ist. Der Standwulst bildet bei Normaldruck in der Flasche die Standfläche für den Behälter.

In bevorzugten Ausführungsformen besteht der Bodenbereich aus Zentralbereich, Flachbereich und Standwulst, der Kante zwischen Zentralbereich und Flachbereich und optional der Kante zwischen Flachbereich und Standwulst.

Es ist besonders bevorzugt, dass der Standwulst den Flachbereich angrenzend umschließt. Das bedeutet, dass der Flachbereich im Wesentlichen unmittelbar an den Standwulst angrenzt, schließt aber nicht aus, dass zwischen Standwulst und Flachbereich eine Kante ausgeprägt sein kann. Der Standwulst kann von dem Flachbereich durch eine Kante getrennt sein, kann aber auch durch den Übergang von Flachbereich in den Seitenbereich des Behälters, d.h. die im Wesentlichen vertikale Seitenwand, gebildet sein. In einer Ausführungsform ist der Standwulst durch den Übergang des Flachbereichs in den Seitenbereich des Behälters ausgebildet. Dies bedeutet, dass der Seitenbereich direkt an den flexiblen Flachbereich angrenzt, d.h. dass Flachbereich und Seitenbereich ineinander übergehen.

Sind Standwulst und Flachbereich alternativ durch eine Kante voneinander getrennt, so ist die Kante als Knick oder Stufe ausgeprägt. Wie hierin verwendet, bedeutet "Knick", dass der Flachbereich und der Standwulst (bzw. der Flachbereich und der Zentralbereich) abgewinkelt aneinander stoßen. Bevorzugt sind Standwulst und Flachbereich durch (nicht mehr als) eine Kante voneinander getrennt.

Die Kantenhöhe, d.h. der Abstand zwischen dem an die Kante angrenzenden Flachbereich und dem an die Kante angrenzenden Standwulst (oder Seitenbereich) oder Zentralbereich, kann klein sein, da bereits eine kleine Kante ausreicht, um den Behälter bei Normaldruck oder geringem Überdruck gegen eine Verformung über den Flachbereich hinaus zu stabilisieren. Die Kantenhöhe beträgt z.B. von 0 bis 5 mm, vorzugsweise von 0 bis 2 mm. Anders gesagt beträgt die Kantenhöhe z.B. weniger als 5 mm, bevorzugt 2 mm oder weniger.

Sofern der Standwulst nicht nur durch den Übergang des Flachbereichs in den Seitenbereich gebildet ist, sondern z.B. durch eine Kante von dem Flachbereich getrennt ist, kann der Standwulst z.B. zum Zweck der Versteifung als eine wulstartige Erhebung auf der Außenfläche und/oder Innenfläche der Behälterwandung im Bodenbereich ausgeprägt sein. Die wulstartige Erhebung hat vorzugsweise nur eine geringe Höhe, z.B. eine Höhe von weniger als 8 mm, vorzugsweise weniger als 5 mm.

Ein Aspekt der Erfindung besteht insbesondere darin, dass der Flachbereich im Vergleich zum Zentralbereich wesentlich leichter verformbar ist.

Eine gegenüber dem Zentralbereich erhöhte Flexibilität des Flachbereichs wird beispielsweise durch eine geringe Wandstärke der Behälterwandung im Flachbereich erreicht. Hierfür weist die Behälterwandung im Flachbereich vorzugsweise eine Wandstärke von maximal 0,25 mm, besonders bevorzugt von maximal 0,20 mm, und stärker bevorzugt von maximal 0,18 mm, auf. Mit anderen Worten kann die Behälterwandung im Flachbereich z.B. eine Wandstärke von 0,05 mm bis 0,25 mm, bevorzugt von 0,05 bis 0,20 mm oder besonders bevorzugt von 0,05 bis 0,18 mm aufweisen. Diese Werte sind insbesondere geeignet für Behälterwandungen mit oder aus Polyestern, wobei die im Einzelfall optimale Wandstärke auch vom konkret verwendeten Material abhängt.

Eine gegenüber dem Flachbereich erhöhte Stabilität des Zentralbereichs wird beispielsweise dadurch erreicht, dass die Behälterwandung im Zentralbereich eine größere Wandstärke aufweist als im Flachbereich.

Kumulativ oder alternativ hierzu wird die Stabilität des Zentralbereichs verbessert, wenn die Behälterwandung im Zentralbereich eine geeignete formstabilisierende Kontur aufweist. Beispielsweise weist die Behälterwandung im Zentralbereich eine Wölbung auf, die insbesondere in Richtung des Behälterinnenraums gerichtet ist. Eine derartige Wölbung ist vorteilhaft wenigstens abschnittsweise in Form eines Domes oder einer Kugelkalotte ausgebildet. Darüber hinaus kann der Zentralbereich weitere formstabilisierende Elemente, wie zum Beispiel Rippen, aufweisen.

Unschädlich für die erfindungsgemäß angestrebte Wirkung dieser Kontur ist dabei, wenn mittig im Zentralbereich von einer idealen, formstabilisierenden Kontur abgewichen wird, um beispielsweise das Vorhandensein eines Anspritzpunktes bei der Herstellung erfindungsgemäßer Behälter aus spritzgegossenen Rohlingen berücksichtigen zu können oder eine weitergehende Stabilisierung im mittleren Bereich des Zentralbereiches durch eine geeignete Kontur zu erreichen.

Wie beschrieben kann eine ausreichende Standstabilität und eine erhöhte Flexibilität des Flachbereichs im Vergleich zum Zentralbereich bereits durch die Formstabilisierung des Zentralbereichs erreicht werden. Der Flachbereich und der Zentralbereich können daher auch im Wesentlichen die gleiche Wandstärke aufweisen. Da die Flexibilität des Flachbereichs auch größere Druckdifferenzen ausgleichen kann, reichen erfindungsgemäß auch besonders dünne Wandstärken aus, um relativ stabile Behälter zu erzeugen.

Auch der Flachbereich kann eine Wölbung aufweisen, vorzugsweise eine Wölbung, die bei Normaldruck in den Behälterinnenraum weist. Die dadurch erzielte leichte Formstabilisierung des Flachbereichs verhindert nicht die Auswölbung des Flachbereichs sondern vergrößert lediglich die auswölbbare Fläche des Flachbereichs. So wird die ausgleichbare Druckdifferenz weiter vergrößert. Die Wölbung kann wenigstens abschnittweise in Form eines Domes ausgebildet sein, der durch den Zentralbereich und die Kante zwischen Zentralbereich und Flachbereich unterbrochen ist. Vorzugsweise umfasst der Flachbereich jedoch keine weiteren formstabilisierenden Strukturen, z.B. keine Rippen.

Die der Erfindung zugrundeliegende Aufgabe wird auch gelöst durch eine Blasform zur Herstellung eines erfindungsgemäßen Behälters, wobei die Blasform als Hohlform ausgebildet ist und eine Kontur der Behälterwandung des herzustellenden Behälters vorbestimmt.

Die erfindungsgemäße Blasform ist vorteilhafterweise mehrteilig ausgebildet, wobei die Blasform insbesondere eine Bodenform zum Vorgeben der Kontur eines Bodenbereichs des Behälters aufweist. Eine derartige Bodenform für eine erfindungsgemäße Blasform ist auch eigenständig als erfindungsgemäß anzusehen. Die Erfindung betrifft somit in einem weiteren Aspekt eine Bodenform zur Herstellung eines erfindungsgemäßen Behälters.

Die Bodenform besteht im Wesentlichen aus einem Formkörper, der Formflächen aufweist, die die Kontur der Behälterwandung im Bodenbereich vorgeben. Der Formkörper weist insbesondere Formflächen auf, welche die Kontur des Zentralbereichs, des Flachbereichs und des Standwulstes vorgeben. Darüber hinaus weist der Formkörper eine Kantenkontur auf, die zum Ausformen der Kante zwischen Zentralbereich und Flachbereich geeignet ist, und optional eine weitere Kantenkontur, die zum Ausformen der Kante zwischen Flachbereich und Standwulst (bzw. Seitenwand) geeignet ist.

Die Bodenform ist bevorzugt einteilig ausgeprägt.

Die Erfindung wird nachfolgend ohne Beschränkung des allgemeinen Erfindungsgedankens anhand eines Ausführungsbeispiels mit Verweis auf die Zeichnungen erläutert. Es zeigen:
- Fig. 1: schematisch ein Ausführungsbeispiel eines erfindungsgemäßen Behälters;
- Fig. 2a: schematisch eine perspektivische Darstellung des Bodenbereichs des Behälters aus Fig. 1;
- Fig. 2b: schematisch eine Schnittdarstellung eines Teils des in Fig. 1 gezeigten Behälters;
- Fig. 3a: schematisch ein Ausführungsbeispiel einer Bodenform für eine erfindungsgemäße Blasform;
- Fig. 3b: schematisch eine Schnittdarstellung der Bodenform zur Formung des Bodens aus Fig. 2a; und
- Fig. 4: schematisch eine Schnittdarstellung des in Fig. 2b abgebildeten Teils des Behälters, wobei der Flachbereich ausgewölbt ist.

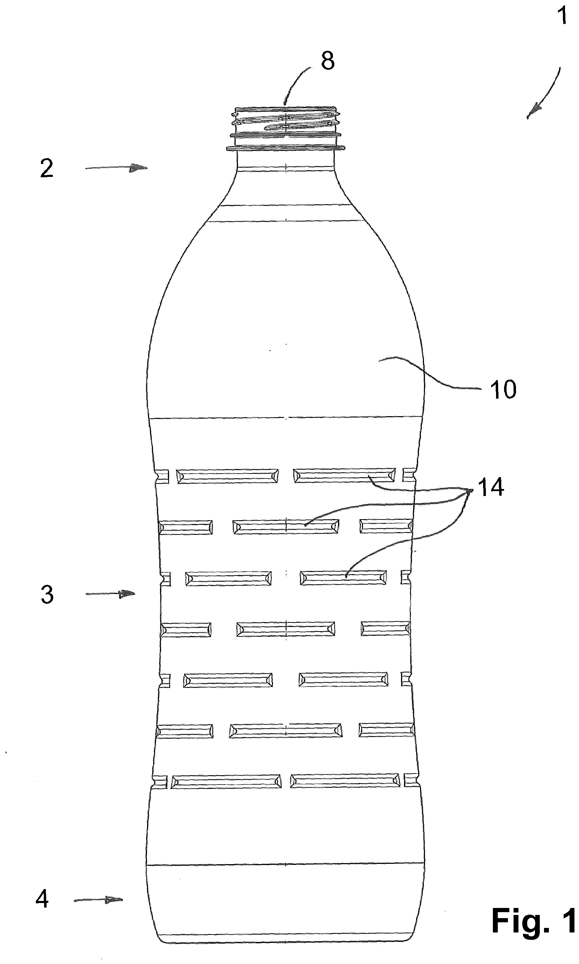

Fig. 1 zeigt beispielhaft ein Ausführungsbeispiel eines erfindungsgemäßen Behälters 1, der als Flasche ausgebildet ist. Abgesehen von einer Öffnung 2 weist der Behälter 1 eine Behälterwandung 10 auf, die sich aufteilt in einen Mündungsbereich 2 an der Öffnung 8, einen Bodenbereich 4 sowie einen sich zwischen Mündungsbereich 2 und Bodenbereich 4 erstreckenden Seitenbereich 3. Zur Erhöhung der Flächenstabilität weist die Behälterwandung 10 im Seitenbereich 3 Stabilisierungsrippen 14 auf.

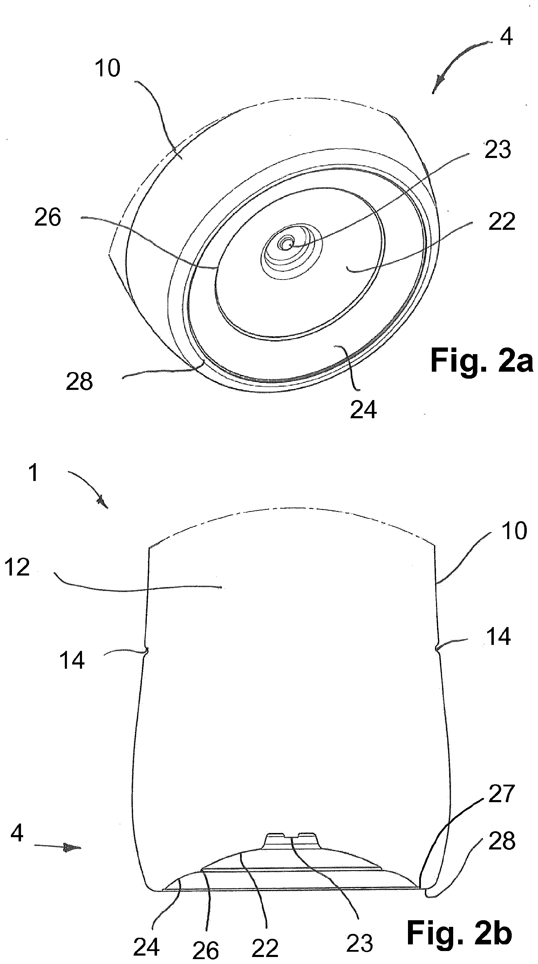

Eine perspektivische Ansicht des Bodenbereichs 4 ist schematisch in Fig. 2a gezeigt, eine schematische Schnittdarstellung des unteren Teils des Behälters 2 in Fig. 2b.

Die Behälterwandung 10 weist im Bodenbereich 4 eine kreissymmetrische Kontur auf, die sich im Wesentlichen konzentrisch um einen Anspritzpunkt 23 erstreckt. Der Anspritzpunkt 23 ist Überbleibsel eines spritzgegossenen Rohlings, aus dem der Behälter 1 nach thermischer Konditionierung mittels einer Blasform 31 in einem Streckblasprozess hergestellt wurde.

In unmittelbarer Nähe des Anspritzpunktes 23 weist die Kontur der Behälterwandung 10 eine Vertiefung auf, die in einen gewölbten Zentralbereich 22 übergeht. Im Zentralbereich 22 ist die Behälterwandung 10 ansonsten gewölbt und dadurch besonders formstabil, wobei die Vertiefung um den Anspritzpunkt 23 nach Möglichkeit derart ausgelegt ist, dass diese Formstabilität unterstützt oder sogar verbessert wird. Zudem ist denkbar, im Zentralbereich 22 zur weiteren Stabilisierung eine vergleichsweise große Wandstärke bzw. eine vergleichsweise dicke Behälterwandung vorzusehen.

Radial außerhalb des Zentralbereichs 22 ist in der Behälterwandung 10 ein Flachbereich 24 vorgesehen, der den Zentralbereich 22 ringförmig umgibt. Im Rahmen der Erfindung ist es dabei vorteilhaft, wenn der Flachbereich 24 im Wesentlichen konzentrisch um den Zentralbereich 22 ausgerichtet ist. Weiter vorteilhaft ist es, wenn der Zentralbereich 22 und der Flachbereich 24 innerhalb der üblichen Fertigungstoleranzen rotationssymmetrisch, insbesondere kreissymmetrisch, ausgebildet sind.

Der Flachbereich 24 ist erfindungsgemäß flexibel ausgestaltet. Hierfür ist insbesondere vorgesehen, dass zwischen dem Zentralbereich 22 und dem Flachbereich 24 eine Kante 26 in der Behälterwandung 10 ausgebildet ist, an der Zentralbereich 22 und Flachbereich 24 abgewinkelt zueinander aneinander stoßen. Zudem kann vorgesehen sein, die Wandstärke der Behälterwandung 10 im Flachbereich 24 vergleichsweise dünn auszuführen. Wenn die Behälterwandung im Wesentlichen aus PET besteht, hat sich für den gezeigten Behälter 1 eine Wandstärke im Flachbereich 24 von etwa 0,16 mm in der Praxis bewährt. Der Fachmann wird jedoch berücksichtigen, dass dies ein für ein einzelnes Ausführungsbeispiel der Erfindung optimierter Wert ist, von dem im Rahmen der Erfindung abgewichen werden kann und insbesondere auch vom verwendeten Material abhängt.

Erfahrungsgemäß sollte die Wandstärke im Flachbereich 24 jedoch 0,25 mm nicht überschreiten, wobei sich für eine große Bandbreite verschiedener Behälter Wandstärken von 0,2 mm oder darunter bewährt haben, z.B. Wandstärken von 0,18 mm oder weniger.

Bei der beispielhaft gezeigten Flasche ist zudem die Kante 26 als verstärkte Wulst ausgebildet, so dass die Kante einen knickstabilen Ring zwischen Zentralbereich 22 und Flachbereich 24 ausbildet. Dies erhöht die Stabilität des Zentralbereichs 22 und begünstigt eine Verformung des Flachbereichs 24 unter Druckeinwirkung, da ein Kraftfluss vom Flachbereich 24 zum Zentralbereich 22 an der Kante 26 umgelenkt wird und dadurch eine stabilisierende Abstützung des Flachbereichs 24 am Zentralbereich 22 gestört wird. Radial außerhalb des Flachbereichs 24 ist in der Behälterwandung 10 ein Standwulst 28 ausgebildet, der als stabilisierter Ring den Flachbereich 24 angrenzend umschließt.

Insgesamt ergibt sich so erfindungsgemäß eine Kontur, bei der sich der ringförmige Flachbereich 24 zwischen zwei vergleichsweise stabilen Ringen erstreckt und dadurch eine Funktionalität ähnlich eines Rollbalges erlangt, so dass unter Verformung des Flachbereichs 24 eine Bewegbarkeit des formstabilisierten Zentralbereiches 22 erreicht wird.

Insbesondere kann sich der Zentralbereich 22 zur Volumenreduzierung des Behälterinnenraums 12 nach oben und zur Volumenvergrößerung nach unten bewegen und so auftretende Druckunterschiede zwischen dem Behälterinnenraum 12 und der Umgebung zumindest teilweise ausgleichen.

In der Regel wird der als Flasche ausgebildete Behälter 1 dabei auf dem ringförmigen Standwulst 28 sicher stehen. Die Standfestigkeit ist bei der Erfindung jedoch auch dann gewährleistet, wenn der Flachbereich 24 sich bei Volumenvergrößerung des Behälterinnenraums 12 über den Standwulst 28 hinaus nach unten auswölbt. In diesem Fall ergibt sich ein ringförmiger Grat in dem ausgewölbten Flachbereich 24, der aber auf jeden Fall mindestens so groß ist wie der durch die Kante 26 gebildete Ring und somit stets ausreichend Standfläche bereitstellt.

Für diese erfindungsgemäß angestrebte Wirkweise sind eine wulstartige Stabilisierung der Kante und/oder das Vorhandensein eines Standwulstes 28 vorteilhaft. Die beschriebene Wirkweise des erfindungsgemäßen Bodenbereichs wird jedoch bereits dann im Wesentlichen erreicht, wenn der innere Ring als einfacher Knick zwischen Zentralbereich 22 und Flachbereich 24 und der äußere Ring durch den Übergang des Flachbereichs 24 in die im Wesentlichen vertikale Seitenwand des Behälters ausgebildet sind.

Bei der in Fig. 2b beispielhaft gezeigten Flasche ist zudem die Kante 27, d.h. die Kante zwischen Flachbereich 24 und Standwulst 28, als Stufe ausgebildet, so dass die Kante einen knickstabilen Ring zwischen Flachbereich 24 und Standwulst 28 ausbildet. Dies erhöht die Stabilität und begünstigt eine Verformung des Flachbereichs 24 unter Druckeinwirkung, da ein Kraftfluss vom Flachbereich 24 zum Standwulst 28 an der Kante 27 umgelenkt wird und dadurch eine stabilisierende Abstützung des Flachbereichs 24 am Standwulst 28 gestört wird.

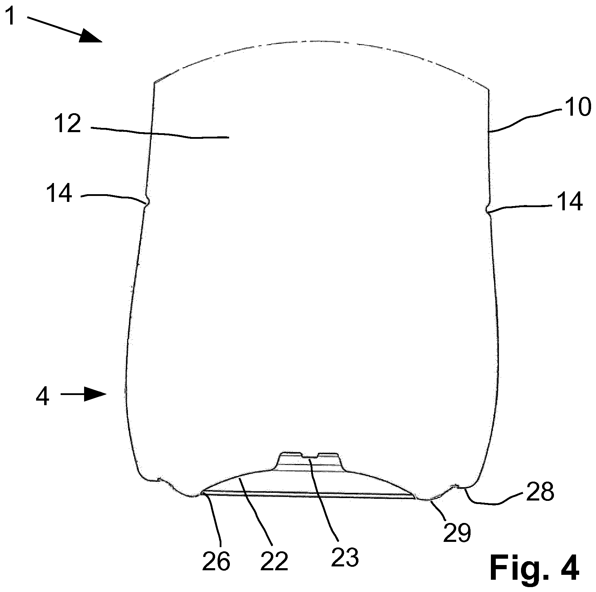

Fig. 4 zeigt beispielhaft ein Ausführungsbeispiel des erfindungsgemäßen Behälters 1 aus Fig. 2b, wobei der Flachbereich 24 durch eine Volumenvergrößerung des Behälterinnenraums aus dem Behälterinneren heraus in Längsrichtung des Behälters 1 über den Standwulst 28 hinaus ausgewölbt ist. Der Flachbereich 24 bildet hierdurch einen Standring 29, der den Zentralbereich 22 bzw. die Kante 26 ringförmig umgibt und als sichere Standfläche für den Behälter 1 dienen kann. Der Zentralbereich 22 ist formstabilisiert in Form eines Domes ausgebildet und wölbt sich in der Regel nicht aus dem Behälterinneren heraus aus.

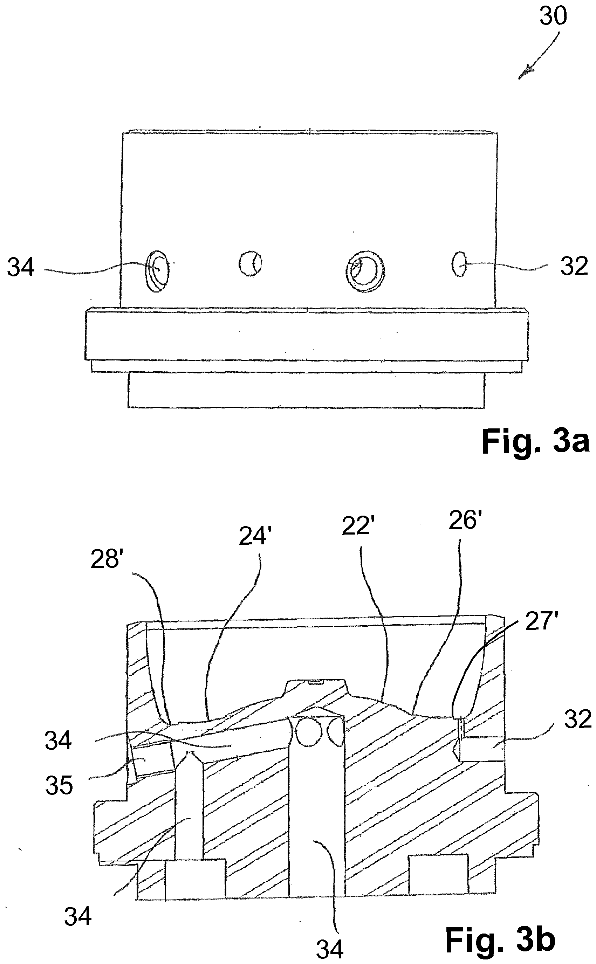

Erfindungsgemäß ist auch eine Bodenform 30, mittels derer die beschriebene erfindungsgemäße Bodenkontur eines Behälters 1 im Bodenbereich 4 herstellbar oder abformbar ist. Eine beispielhafte Bodenform 30 zur Abformung des in den Fig. 2a und 2b gezeigten Bodenbereichs 4 ist in den Fig. 3a und 3b gezeigt, wobei Fig. 3a eine schematische Seitenansicht und Fig. 3b eine schematische Schnittdarstellung zeigt.

Die Bodenform 30 besteht im Wesentlichen aus einem Formkörper, der beispielsweise aus einem Metall wie Aluminium oder Stahl ausgebildet ist. In diesem Formkörper sind Formflächen 22', 26' und 28' vorgesehen, die die Kontur der Behälterwandung im Bodenbereich 4, insbesondere des Zentralbereichs 22, des Flachbereichs 24 und des Standwulstes 28 vorgeben. Zudem ist eine Kantenkontur 26' zum Ausformen der Kante 26 zwischen Zentralbereich 22 und Flachbereich 24 vorhanden. Vorteilhafterweise kann auch die Kantenkontur 27' vorgesehen sein, die dem Ausformen der Kante zwischen Flachbereich und Standwulst dient.

Außerdem weist der Formkörper Bohrungen 34 zum Ausbilden von Kühlkanälen sowie Bohrungen 32 zum Ausbilden von Entlüftungskanälen auf, wobei die Bohrungen 34 für die Kühlkanäle fertigungsbedingt außenseitig mit einem Verschluss 35 verschlossen sind.

### Bezugszeichen

- 1: Behälter
- 2: Mündungsbereich
- 3: Seitenbereich
- 4: Bodenbereich
- 8: Öffnung
- 10: Behälterwandung
- 12: Behälterinnenraum
- 14: Stabilisierungsrippe
- 22: Zentralbereich
- 22': Formfläche für Zentralbereich
- 23: Anspritzpunkt
- 24: Flachbereich
- 24': Formfläche für Flachbereich
- 26: Kante
- 26': Formkontur für Kante
- 27: Kante zwischen Flachbereich und Standwulst
- 27': Formkontur für Kante zwischen Flachbereich und Standwulst
- 28: Standwulst
- 28': Formfläche für Standwulst
- 29: Standring
- 30: Bodenform
- 31: Blasform
- 32: Bohrung für Entlüftungskanal
- 34: Bohrung für Kühlkanal
- 35: Verschluss

## Patentansprüche

1. Behälter (1) zur Aufnahme von flüssigem Füllgut, umfassend eine einen Behälterinnenraum (12) umschließende Behälterwandung (10) mit einer Öffnung (8), wobei die Behälterwandung (10) einen Mündungsbereich (2) an der Öffnung (8), einen dem Mündungsbereich (2) entgegengesetzt angeordneten Bodenbereich (4) sowie einen sich zwischen Mündungsbereich (2) und Bodenbereich (4) erstreckenden Seitenbereich (3) aufweist, wobei die Behälterwandung (10) im Bodenbereich (4) einen formstabilisierten Zentralbereich (22) sowie einen den Zentralbereich (22) ringförmig umgebenden flexiblen Flachbereich (24) aufweist, wobei die Behälterwandung (10) vom Zentralbereich (22) derart abgewinkelt in den Flachbereich (24) übergeht, dass zwischen dem Zentralbereich (22) und dem Flachbereich (24) eine den Zentralbereich (22) ringförmig umgebende Kante (26) in der Behälterwandung (10) ausgebildet ist, wobei im Bodenbereich (4) der Behälterwandung (10) ein den Flachbereich (24) ringförmig umgebender Standwulst (28) ausgebildet ist, **dadurch gekennzeichnet, dass** der Flachbereich (24) derart ausgebildet ist, dass sich die Behälterwandung (10) im Flachbereich (24) aus dem Behälterinneren heraus in Längsrichtung des Behälters (1) über den Standwulst (28) hinaus auswölben und einen Standring (29) bilden kann, und dass sich der Durchmesser des Standrings bei steigendem Innendruck in dem Behälter verkleinern kann.

2. Behälter (1) nach Anspruch 1, **dadurch gekennzeichnet, dass** die Behälterwandung (10) ein thermoplastisches Material umfasst, das als spritzgegossener Rohling bereitgestellt und bei der Herstellung des Behälters (1) mittels einer hohlen Blasform nach geeigneter thermischer Konditionierung durch Anwendung eines Streckblasverfahrens umgeformt wurde.

3. Behälter (1) nach Anspruch 1 oder 2, **dadurch gekennzeichnet, dass** die Behälterwandung (10) entlang der Kante (26) wulstartig ausgebildet ist.

4. Behälter (1) nach einem der Ansprüche 1 bis 3, **dadurch gekennzeichnet, dass** die Behälterwandung (10) im Flachbereich (24) eine Wandstärke von maximal 0,25 mm, vorzugsweise von maximal 0,20 mm, aufweist.

5. Behälter (1) nach einem der Ansprüche 1 bis 4, **dadurch gekennzeichnet, dass** die Behälterwandung (10) im Zentralbereich (22) eine größere Wandstärke aufweist als im Flachbereich (24).

6. Behälter (1) nach einem der Ansprüche 1 bis 5, **dadurch gekennzeichnet, dass** die Behälterwandung (10) im Zentralbereich (22) eine geeignete formstabilisierende Kontur aufweist.

7. Behälter (1) nach Anspruch 6, **dadurch gekennzeichnet, dass** die formstabilisierende Kontur wenigstens abschnittsweise als Wölbung, insbesondere in Form eines Domes oder einer Kugelkalotte, ausgebildet ist.

8. Behälter (1) nach einem der Ansprüche 1 bis 7, **dadurch gekennzeichnet, dass** der Zentralbereich (22) einen Durchmesser von 40 bis 70 % des Durchmessers des Bodenbereichs (4) aufweist.

9. Behälter (1) nach einem der Ansprüche 1 bis 8, **dadurch gekennzeichnet, dass** der Standwulst (28) den Flachbereich (24) angrenzend umschließt oder von dem Flachbereich (24) nur durch eine Kante (27) getrennt ist, die den Flachbereich (24) ringförmig umschließt.

10. Blasform (31) zur Herstellung eines Behälters (1) nach einem der Ansprüche 1 bis 9, wobei die Blasform (31) als Hohlform ausgebildet ist und die Kontur der Behälterwandung (10) des herzustellenden Behälters (1) vorbestimmt.

11. Blasform (31) nach Anspruch 10, **dadurch gekennzeichnet, dass** die Blasform (31) mehrteilig ausgebildet ist, wobei die Blasform (31) insbesondere eine Bodenform (30) zum Vorgeben der Kontur eines Bodenbereichs (4) des Behälters (1) aufweist.

12. Blasform (31) nach einem der Ansprüche 10 bis 11, **dadurch gekennzeichnet, dass** die Bodenform (30) eine Kantenkontur (26') aufweist.

13. Blasform (31) nach einem der Ansprüche 10 bis 12, **dadurch gekennzeichnet, dass** die Bodenform (30) einteilig ausgebildet ist.

## Claims

1. A container (1) for receiving liquid filling material, comprising a container wall (10), which surrounds a container interior (12), comprising an opening (8), wherein the container wall (10) has an opening region (2) at the opening (8), a base region (4) arranged opposite the opening region (2), as well as a lateral region (3), which extends between opening region (2) and base region (4), wherein the container wall (10) has a dimensionally stabilised central region (22) in the base region (4), as well as a flexible flat region (24), which annularly surrounds the central region (22), wherein the container wall (10) transitions from the central region (22) into the flat region (24) at an angle in such a way that an edge (26), which annularly surrounds the central region (22), is formed in the container wall (10) between the central region (22) and the flat region (24), wherein a standing bead (28), which annularly surrounds the flat region (24), is formed in the base region (4) of the container wall (10), **characterised in that** the flat region (24) is formed in such a way that in the flat region (24), the container wall (10) can bulge out of the container interior in the longitudinal direction of the container (1) beyond the standing bead (28) and can form a standing ring (29), and that the diameter of the standing ring can decrease when the internal pressure in the container increases.

2. The container (1) according to Claim 1, **characterised in that** the container wall (10) comprises a thermoplastic material, which is provided as injection-moulded blank and which was formed during the production of the container (1) by means of a hollow blow mould after suitable thermal conditioning by using a stretch blow moulding process.

3. The container (1) according to Claim 1 or 2, **characterised in that** the container wall (10) is formed in a bead-like manner along the edge (26).

4. The container (1) according to any one of Claims 1 to 3, **characterised in that** in the flat region (24), the container wall (10) has a wall thickness of maximally 0.25 mm, preferably of maximally 0.20 mm.

5. The container (1) according to any one of Claims 1 to 4, **characterised in that** the container wall (10) has a greater wall thickness in the central region (22) than in the flat region (24).

6. The container (1) according to any one of Claims 1 to 5, **characterised in that** in the central region (22), the container wall (10) has a suitable dimensionally stabilising contour.

7. The container (1) according to Claim 6, **characterised in that** the dimensionally stabilising contour is formed at least in some sections as bulge, in particular in the shape of a dome or of a spherical cap.

8. The container (1) according to any one of Claims 1 to 7, **characterised in that** the central region (22) has a diameter of between 40 and 70% of the diameter of the base region (4).

9. The container (1) according to any one of claims 1 to 8, **characterised in that** the standing bead (28) adjacently surrounds the flat region (24) or is separated from the flat region (24) only by an edge (27), which annularly surrounds the flat region (24).

10. A blow mould (31) for producing a container (1) according to any one of Claims 1 to 9, wherein the blow mould (31) is formed as hollow mould and predetermines the contour of the container wall (10) of the container (1), which is to be produced.

11. The blow mould (31) according to Claim 10, **characterised in that** the blow mould (31) is formed in several pieces, wherein the blow mould (31) in particular has a base mould (30) for specifying the contour of a base region (4) of the container (1).

12. The blow mould (31) according to any one of Claims 10 to 11, **characterised in that** the base mould (30) has an edge contour (26').

13. The blow mould (31) according to any one of Claims 10 to 12, **characterised in that** the base mould (30) is formed in one piece.

## Revendications

1. Récipient (1) destiné à recevoir un produit de remplissage liquide comprenant une paroi (10) enveloppant un espace intérieur (12) et dotée d'une ouverture (8), la paroi (10) du récipient présentant une section d'embouchure (2) au niveau de l'ouverture (8), une zone de fond (4) opposée à la section d'embouchure (2) ainsi qu'une zone latérale (3) s'étendant entre la section d'embouchure (2) et la zone de fond (4), la paroi (10) du récipient présentant dans la zone de fond (4) une zone médiane (22) de forme stabilisée ainsi qu'une zone plane flexible (24) entourant annulairement la zone médiane (22), la transition de la paroi (10) du récipient entre la zone médiane (22) et la zone plane (24) étant réalisée avec un angle tel qu'un bord (26) entourant annulairement la zone médiane (22) est formé dans la paroi (10) du récipient entre la zone médiane (22) et la zone plane (24), un bourrelet (28) entourant annulairement la zone plane (24) étant formé dans la zone de fond (4) de la paroi (10) du récipient, **caractérisé en ce que** la zone plane (24) a une forme telle que la paroi (10) du récipient peut, dans la zone plane (24), se bomber vers l'extérieur du récipient (1) au-delà du bourrelet (28) dans le sens longitudinal du récipient et former un anneau (29) de maintien, et **en ce que** le diamètre de l'anneau de maintien peut diminuer en cas d'augmentation de la pression intérieure du récipient.

2. Récipient (1) selon la revendication 1, **caractérisé en ce que** la paroi (10) du récipient est constituée d'un matériau thermoplastique mis à disposition sous forme de pièce brute moulée par injection et transformée, après un conditionnement thermique approprié, par application d'un procédé de soufflage-étirage lors de la fabrication du récipient (1) au moyen d'un moule de soufflage creux.

3. Récipient (1) selon la revendication 1 ou 2, **caractérisé en ce que** la paroi (10) du récipient forme un bourrelet le long du bord (26).

4. Récipient (1) selon l'une des revendications 1 à 3, **caractérisé en ce que** la paroi (10) du récipient présente dans la zone plane (24) une épaisseur maximale de 0,25 mm, de préférence de 0,20 mm au maximum.

5. Récipient (1) selon l'une des revendications 1 à 4, **caractérisé en ce que** la paroi (10) du récipient présente dans la zone médiane (22) une épaisseur supérieure à celle de la zone plane (24).

6. Récipient (1) selon l'une des revendications 1 à 5, **caractérisé en ce que** la paroi (10) du récipient présente dans la zone médiane (22) un contour stabilisateur de forme approprié.

7. Récipient (1) selon la revendication 6, **caractérisé en ce que** le contour stabilisateur de forme a, sur certaines sections au moins, une forme bombée, notamment une forme de dôme ou de calotte sphérique.

8. Récipient (1) selon l'une des revendications 1 à 7, **caractérisé en ce que** la zone médiane (22) présente un diamètre de 40 à 70 % du diamètre de la zone de fond (4).

9. Récipient (1) selon l'une des revendications 1 à 8, **caractérisé en ce que** le bourrelet (28) entoure la zone plane (24) de façon contigüe ou n'est séparé de la zone plane (24) que par un bord (27) qui entoure annulairement la zone plane (24).

10. Moule de soufflage (31) pour la fabrication d'un récipient (1) selon l'une des revendications 1 à 9, le moule de soufflage (31) étant réalisé sous forme de moule creux et prédéterminant le contour de la paroi (10) du récipient (1) à fabriquer.

11. Moule de soufflage (31) selon la revendication 10, **caractérisé en ce que** le moule de soufflage (31) est formé de plusieurs parties, le moule de soufflage (31) présentant notamment un moule de fond (30) pour déterminer le contour d'une zone de fond (4) du récipient (1).

12. Moule de soufflage (31) selon l'une des revendications 10 à 11, **caractérisé en ce que** le moule de fond (30) présente un contour de bord (26').

13. Moule de soufflage (31) selon l'une des revendications 10 à 12, **caractérisé en ce que** le moule de fond (30) est formé d'une seule pièce.
